# EUROPEAN PATENT SPECIFICATION

(11) **EP 3 176 466 B1**
(45) Date of publication and mention of the grant of the patent: **01.04.2020**
(21) Application number: 16460086.8
(22) Date of filing: 16.11.2016
(51) Int. Cl.: F16H 7/06, F16H 7/18, F16G 13/06, F16H 9/26

(54) **CHAIN DRIVE**
KETTENGETRIEBE
TRANSMISSION À CHAÎNE

(30) Priority: 04.12.2015 PL 41511915
(43) Date of publication of application: 07.06.2017
(73) Proprietor: Wrona, Radoslaw, 266-015 Przylep (PL); Zbikowski, Jerzy, 65-536 Zielona Góra (PL); Erber, Jerzy, 65-119 Zielona Góra (PL); Zbikowski, Zbignie, 65-536 Zielona Góra (PL)
(72) Inventor: Wrona, Radoslaw, 266-015 Przylep (PL); Zbikowski, Jerzy, 65-536 Zielona Góra (PL); Erber, Jerzy, 65-119 Zielona Góra (PL); Zbikowski, Zbignie, 65-536 Zielona Góra (PL)
(74) Representative: Piatkowska, Elzbieta

(56) References cited:
- WO-A1-2006/011820
- DE-A1-102012 202 309

## Description

The invention is related to a chain drive transferring torque, used in particular in drives of mechanical vehicles and in wind power plants and hydroelectric power plants.

Planetary gears with a sprocket system including the biggest, ring gear with internal teeth and with a sun gear located within this sprocket and provided with external teeth, are commonly known in the art. Planet wheels, also known as satellite wheels, are rotating around the sun gear and inside the ring gear, installed on bearings around the circumference of a rotary yoke. Planet wheels are simultaneously meshed with the sun gear and with the ring gear. Locking the sun gear, the ring gear or the yoke provides various gear positions and shifts of this particular gear.

Various chain drive embodiments are also known in the art, as well as from invention disclosures. For example, the book by M. Dudziak "Przek 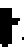 adnie ci 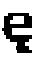 gnowe" (WN PWN, Warszawa 1997, p.246-253), presents a chain drive including at least two toothed gears partially wrapped around by a chain consisting of a number of links connected with articulate joints. A small sag of the chain, periodically or continuously regulated by a tensioning roller, is required for the chain to be properly running on the gears. Chain drives known in the art commonly use ladder-type roller chains consisting of alternating internal and external links, constructed using external and internal plates and pins joining said plates, as well as of bushings and rollers. Use of adequately extended pins and external and internal plates installed alternately on the pins allows a multiple ladder-type chain to be constructed. Another chain type is provided with a pin-type toothed chain, consisting of appropriately shaped plates, each of which is provided with two teeth-shaped protrusions formed on one of the longer edges, corresponding to the outlines of toothed gears forming a chain drive with the chain, whilst the other edge of the plate is smooth. Two holes are formed in each of the chain plates, in which pins connecting adjacent links are installed. Patent disclosure GB 230839 discloses a wheel-type, toothed chain drive using chain links, each of which Is provided with two teeth on one side and with smooth surface on the other side. Ends of each chain link are shaped identically to sides of teeth of cooperating toothed gears.

Patent disclosure US 6440022 also discloses a toothed chain provided with teeth on both sides, with first and second links placed alternately in the longitudinal and in the transverse direction. Each first link of the chain includes an odd number of transversely installed link connectors, whilst each second link of the chain includes an even number of transversely installed connectors and pins, each of which is adapted to connect two opposite chain links. Connectors of the first and of the second chain links have identical side profile, such that two teeth are located on one side of the profile, whilst the other side is smooth. Teeth of terminal connectors are pointing inside the chain at each first and second link, whilst teeth of internal connectors are pointing in the opposite direction.

Patent application US 2003/0017896 discloses a toothed gear with a drive transmission chain made of links. This gear has radially protruding teeth, separated at a distance corresponding to the length of chain links. The chain is provided with two arrays of alternately placed driving and guiding links, connected with pins. Both link arrays are intertwined along the chain, such that rows of links of the second array are located between links of adjacent rows of the first array, whilst rows of links of the first arrays are located between links of adjacent rows of the second array.

Patent disclosure WO95/04889 discloses a self-tensioning driving chain, in which the length of the moving chain and its tension are constant despite continuously varying distance between the driven and the driving gears. This tension is ensured by appropriate shifting of an eccentric, free gear. This gear provides a pendulum axis for two bifurcated arms holding the chain drive and enabling the desired distance between the driving and the driven wheel to be set, with said wheels installed at the ends of the arms. At least a part of the free wheel is wrapped by a chain, both on the side of the driving wheel and on the side of the driven wheel.

Meanwhile, patent disclosure PL 209441 discloses a chain drive with two toothed gears, a toothed chain and a tensioning wheel, in which the centre of the driven toothed gear lies outside a circle inscribed Into a part of a chain cooperating with said toothed gear. The chain consists of alternately placed, internal and external links. Each link includes a pair of parallel plates of a substantially triangular shape. These plates are connected by pins, whereby the geometric axis of one of the pins lies outside the plane formed by axes of other link pins. The distance between chain pins on the side cooperating with the driving gear corresponds to the distance between teeth of said gear and is smaller than the distance between chain pins on the side cooperating with the driven gear in the cooperation area of the chain with this gear. The distance between pins of the chain is identical along its entire circumference and corresponds to the distance between teeth of the driving gear. In addition, the distance between chain pins is variable and corresponds to the diameter of the driven gear in the meshing area between the chain and the gear. The chain drive known from patent disclosure PL 209441 allows identical rotation speed of the driving and of the driven toothed gears of different diameters to be obtained, with drive transmission provided by a single chain.

Moreover patent application DE 10 2012 202 309, which shows all the features of the preamble of claim 1, discloses a chain drive, made from driven, internally toothed gear and a driving, internal gear with external teeth meshed with the driven gear via a chain, as well as tensioning wheel. Driving gear and tensioning wheel are located inside said internally toothed, driven gear and wrapped by the drive chain, made of alternate, external links and internal links. Links of the chain consisting of mutually parallel plates connected by pins and provided with protrusions coupling with the driven gear in the point in which they are pressed against the teeth of the gear by the tensioning wheel. Protrusions of links of the chain provided as rollers engaging at their side to one of the plates of each link and positioned co-axially with pins connecting a pair of plates. Roller-type protrusions of links, acting as chain teeth, are thus provided with the same pitch, corresponding to identical pitch used by teeth of the aforementioned gears.

It is the object of the present invention to provide a chain drive with significantly improved efficiency compared to that of known drives.

This problem is solved by a chain drive made of an internally toothed driven gear and an internal driving gear with external teeth meshed with said internally toothed driven gear via a drive chain, as well as a tensioning wheel, which are located inside said internally toothed driven gear and wrapped by the drive chain, made of alternate, external links and internal links, wherein the links of the chain consisting of mutually parallel plates which are connected by pins to each other and provided with protrusions meshing with the driven gear in the point in which they are pressed against the teeth of the driven gear by the tensioning wheel, wherein the protrusions of links of the chain are formed as teeth, protruding from both plates of each link on the external side of the chain, which side is in co-operation with the driven gear, and in that in each of the links, the geometric axis of the pin, located on the side of the chain in co-operation with the driven gear, is located outside a plane formed by axes of the remaining pins of the link, wherein the alternately placed external links and internal links of the chain are connected to each other by the remaining pins which are located on the with the gear co-operating side of the chain. According to a particular embodiment of the invention, the distance between said remaining pins of the links of the chain on its side of co-operation with the driving gear corresponds to the distance between the teeth of the driving gear and is smaller than the distance between pins of links of the chain on its side of co-operation with the driven gear at the coupling point of the chain with the driven gear, whilst the distance between the pins of links of the chain located on its side of co-operation with the driven gear is variable along the circumference of the chain and at the meshing point of the chain with the driven gear said distance between the pins of links of the chain located on its side of co-operation with the driven gear is in accordance with the diameter of the driven gear.

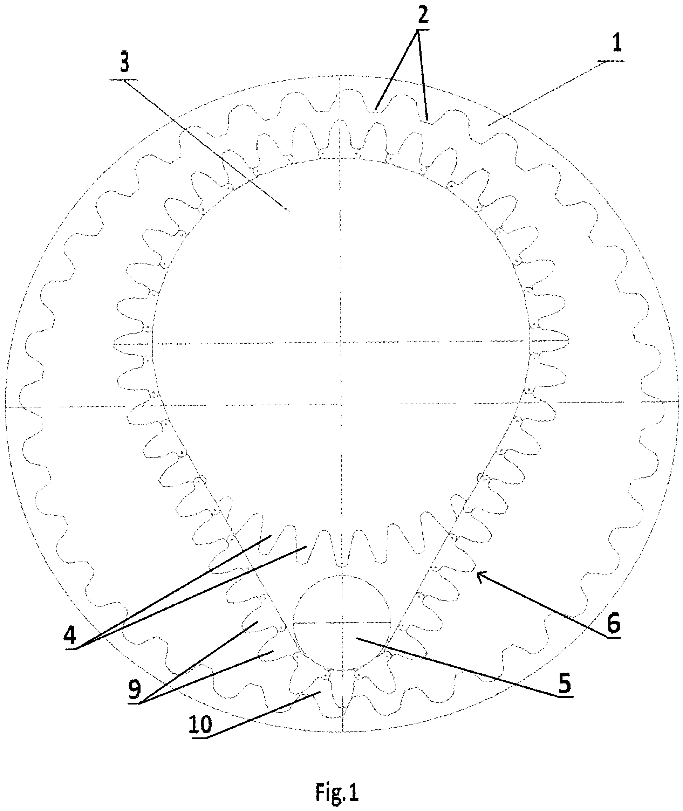

An embodiment of the invention is presented in the drawings, in which Fig.1 presents a schematic view of a cross-section through the chain drive, Fig.2 - a perspective view of a single driving chain link, and Fig.3 - a side view of a part of the chain.

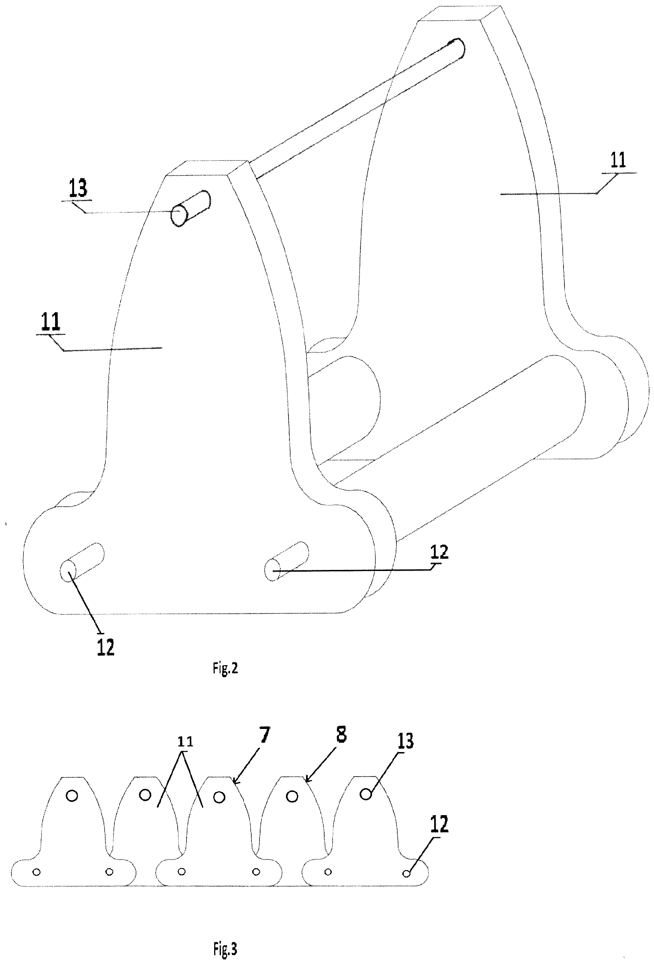

The chain drive according to the invention is provided with a ring, driven toothed gear **1** (which is identical with the internally toothed driven gear 1) with internal teeth **2**, related to a passive axis (not presented). A driving toothed gear **3** with external teeth **4** and a cylindrical tensioning wheel **5** are located inside the driven gear **1**. Driving gear **3** and tensioning wheel **5** have parallel axes and are wrapped by drive chain **6**. Driving gear **3** is related to an active axis (not presented). Each of links **7**, **8** of chain **6** is provided with a pair of twin teeth **9** protruding outside and meshing with the driven gear **1** at point **10**, where they are pressed towards teeth **2** by the tensioning wheel **5**. As Fig.2 and 3 show, chain **6** consists of alternately placed, external **7** and internal **8** links, wherein each of the links **7**, **8** is made of two plates **11** parallel to each other wherein the plates are connected with transverse pins **12** and 13 to each other. The edge of each plate **11** has a tooth outline **9** in its central part.

In each of the links **7**, **8**, geometric axis of the pin **13**, located on the side of chain **6** in co-operation with the driven gear **1**, is located outside the plane formed by axes of two remaining pins **12** of the link. When chain **6** meshes with the driven gear **1**, the distance between pins **12** of links **7**, **8** of chain **6** on its side co-operation with the driving gear **3** corresponds to the distance between teeth **4** of this gear and is smaller than the distance between pins **13** of links **7**, **8** of chain **6** on its side co-operation with the driven gear **1** at the meshing point **10** of chain **6** with this gear. The distance between pins **12** of links **7**, **8** of chain **6** is identical along its entire circumference and corresponds to the distance between teeth **4** of driving gear **3**. Thus, individual teeth **9** of chain **6** are located at the same distance as its links **7**, **8** and teeth **4** of the driving wheel **3**. At the meshing point **10** of chain **6** with the driven gear **1**, the distance between pins **13** of links **7**, **8** on the side co-operation with the driven gear **1** is variable and corresponds to the diameter of said gear. The curvature of tensioning wheel **5** causes chain **6** to bend at its meshing point **10**, and its adjacent teeth **9** are smoothly separating increasing their mutual distance and adapting it to the distance between teeth of the driven gear **1**.

Because of the increased distance between teeth **9** of chain **6**, internal teeth **2** of the ring driven gear **1** may include a smaller number of teeth, adapted to the increased distance. Thus, the driven gear **1** accelerates its rotation around the axis related to the driving gear **3**, ensuring improved efficiency of the gear by decreasing losses occurring during the rotation. Thanks to the variable distance between teeth **9** of chain **6**, the ring driven gear **1** of the drive according to the invention always has fewer teeth than ring gears of traditional planetary gears, whilst retaining the same ratio between the driving gear **3** and the driven gear **1**. Thus, regardless of an increase or a decrease of radius of the driven gear **1**, torque increased or decreased, respectively, retaining savings gained thanks to the rotation of the gear. Changing ratios between the radii of the driven gear **1** and of the internal driving gear **3** may lead to a situation in which both gears **1**, **3** will be provided with an identical number of teeth, making rotation speed between these two gears equal. Links **7**, **8** of chain **6** may be made of an increased number of plates **11** in order to reinforce the chain structure. According to this purpose, links **7**, **8** may also be provided as adequately formed casts or cut from bulk steel of appropriate thickness. Teeth **9** of chain **6** may have any required shape, for example an involute shape, a bevelled shape or a triangular shape.

### List of references

- 1.: driven gear
- 2.: internal gear teeth
- 3.: driving gear
- 4.: external gear tooth
- 5.: tensioning wheel
- 6.: drive chain
- 7.: external link
- 8.: internal link
- 9.: chain tooth
- 10.: meshing point
- 11.: link plate
- 12.: link pin
- 13.: link pin

## Claims

1. Chain drive made of an internally toothed driven gear (1) and an internal driving gear (3) with external teeth (4) meshed with said internally toothed driven gear (1) via a drive chain (6), as well as a tensioning wheel (5), which are located inside said internally toothed driven gear (1) and wrapped by the drive chain (6), made of alternate, external links (7) and internal links (8), wherein the links (7, 8) of the chain (6) consisting of a pair of mutually parallel plates (11) which are connected by pins (12, 13) to each other and provided with protrusions (9) meshing with the driven gear (1) in the point in which they are pressed against the teeth (2) of the driven gear (1) by the tensioning wheel (5), ***characterised in that*** the protrusions (9) of the links **(7, 8)** of the chain **(6)** are formed as teeth **(9)**, protruding from both plates **(11)** of each link **(7, 8)** on the external side of the chain (6), which side is in co-operation with the driven gear (1), and **in that** in each of the links **(7, 8)**, the geometric axis of the pin **(13)**, located on the side of the chain **(6)** in co-operation with the driven gear **(1)**, is located outside a plane formed by axes of the remaining pins **(12)** of the links (7, 8), wherein the alternately placed external links (7) and internal links (8) of the chain (6) are connected to each other by the remaining pins (12) which are located on the with the driving gear (3) co-operating side of the chain (6).

2. Chain drive according to claim 1, ***characterised in that*** the distance between said remaining pins **(12)** of the links **(7, 8)** of the chain **(6)** on its side of co-operation with the driving gear **(3)** corresponds to the distance between the teeth **(4)** of the driving gear (3) and is smaller than the distance between the pins **(13)** of the links **(7, 8)** of the chain **(6)** on its side of co-operation with the driven gear **(1)** at the coupling point **(10)** of the chain **(6)** with the driven gear (1), whilst the distance between the pins **(13)** of the links **(7, 8)** of the chain **(6)** located on its side of co-operation with the driven gear **(1)** is variable along the circumference of the chain **(6)** and at the meshing point **(10)** of the chain **(6)** with the driven gear **(1)** said distance between the pins **(13)** of the links (7, 8) of the chain (6) located on its side of co-operation with the driven gear (1) is in accordance with the diameter of the driven gear **(1)**.

## Patentansprüche

1. Kettentrieb aus einem innenverzahnten angetriebenen Zahnrad (1) und einem inneren antreibenden Zahnrad (3) mit Außenverzahnung (4), die über eine Antriebskette (6) mit dem innenverzahnten angetriebenen Zahnrad (1) in Eingriff stehen, sowie einem Spannrad (5), die sich innerhalb des innenverzahnten angetriebenen Zahnrads (1) befinden und von der Antriebskette (6) umwickeln sind, die aus den aufeinander folgenden äußeren Gliedern (7) und inneren Gliedern (8) ausgeführt ist, wobei die Glieder (7, 8) der Kette (6) aus einem Paar gegenseitig paralleler Platten (11) zusammensetzen, die durch Stifte (12, 13) miteinander verbunden und mit Vorsprüngen (9) ausgestattet sind, die sich mit dem angetriebenen Zahnrad (1) in dem Punkt verzahnen, in dem sie an die Zähne (2) des angetriebenen Zahnrads (1) durch das Spannrad (5) gedrückt werden, ***dadurch gekennzeichnet*, dass** die Vorsprünge **(9)** der Glieder **(7, 8)** der Kette **(6)** als Zähne **(9)** geformt sind, die aus beiden Platten **(11)** jedes Glieds **(7, 8)** auf der Außenseite der Kette **(6)** hervorstehen, wobei diese Seite mit dem angetriebenen Zahnrad **(1)** zusammenwirkt, und in jedem der Glieder **(7, 8)** die geometrische Achse des Stift **(13)**, die sich seitlich an der Kette **(6)** befindet, die mit dem angetriebenen Zahnrad **(1)** zusammenarbeitet, außerhalb der Ebene angebracht, die von den Achsen der übrigen Stifte **(12)** der Glieder **(7, 8)** gebildet wird, wobei die abwechselnd angebrachte äußere Glieder **(7)** und innere Glieder **(8)** der Kette **(6)** mit Hilfe der übrigen Stifte **(12)** miteinander verbunden sind, die sich auf der zusammenarbeitenden Seite der Kette **(6)** mit dem antreibenden Zahnrad **(3)** befinden.

2. Kettenantrieb nach Anspruch 1, ***dadurch gekennzeichnet*, daß** der Abstand zwischen den übrigen Stiften **(12)** der Glieder **(7, 8)** der Kette **(6)** auf ihrer mit dem antreibenden Zahnrad **(3)** zusammenarbeitenden Seite den Abstand zwischen den Zähnen **(4)** des antreibenden Zahnrads **(3)** entspricht und kleiner ist als der Abstand zwischen den Stiften **(13)** der Glieder **(7, 8)** der Kette **(6)** auf ihrer Seite, die mit dem angetriebenen Zahnrad **(1)** am Eingriffspunkt **(10)** der Kette **(6)** mit dem angetriebenen Zahnrad **(1)** zusammenarbeitet, während der Abstand zwischen den Stiften **(13)** der Glieder **(7, 8)** der Kette **(6)**, die auf der Seite ihres Zusammenarbeit mit dem angetriebenen Zahnrad **(1)** stehen, entlang des Umfangs der Kette **(6)** und am Eingriffspunkt **(10)** der Kette **(6)** mit dem angetriebenen Zahnrad **(1)** variabel ist, wobei der Abstand zwischen die Stifte **(13)** der Glieder **(7, 8)** der Kette **(6)**, die sich auf ihrer Seite des Zusammenarbeit mit dem angetriebenen Zahnrad **(1)** befinden, entsprechen dem Durchmesser des angetriebenen Zahnrads **(1)**.

## Revendications

1. L'entraînement par chaîne constitué d'une roue (1) dentée entraînée avec des dents intérieures et d'une roue dentée entraînant intérieure (3) avec des dents externes (4) s'engrenant avec ladite roue dentée (1) entraînée avec des dents intérieures au moyen d'une chaîne d'entraînement (6) ainsi que la roue de tension (5) située à l'intérieur de ladite roue dentée (1) entraînée avec des dents intérieures et enveloppée par la chaîne d'entraînement (6), constituée des maillons externes (7) et maillons internes (8) placés successivement, où les maillons (7, 8) de la chaîne (8) sont constitués des paires de plaques (11) mutuellement parallèles, connectées ensemble avec des broches (12, 13) et équipées de saillies (9) s'engrenant avec la roue dentée entraînée (1) au point où elles sont pressées contre les dents (2) de la roue dentée entraînée (1) par la roue de tension (5) ***caractérisés en ce que*** les saillies (9) des maillons (7, 8) de la chaîne sont formées comme les dents (9) sortant des deux plaques (11) de chaque maillon (7, 8) sur la parte extérieure de la chaîne (6) coopérant avec la roue entraînée (1) et **en ce que** dans chaque maillon (7, 8), l'axe géométrique de la broche (13) situé du côté de la chaîne (6) coopérant avec la roue dentée entraînée (1) est placé à l'extérieur du plan formé par les axes des autres broches (12) des maillons (7, 8), étant entendu que les maillons externes (7) et les maillons internes (8) de la chaîne (6), disposés en alternance, sont reliés l'un à l'autre au moyen des autres broches (12) qui sont situées sur le côté coopérant de la chaîne (6) avec la roue dentée entraînant (3).

2. L'entraînement par chaîne, selon la revendication 1, ***caractérisé en ce que*** la distance entre lesdites autres broches (12) des maillons (7, 8) de la chaîne (6) sur le côté coopérant avec la roue dentée entraînant (3) correspond à la distance entre les dents (4) de la roue entraînant (3) et est inférieure à la distance entre les broches (13) des maillons (7, 8) sur son côté coopérant avec la roue dentée entraînée (1) au point de la liaison (10) de la chaîne (6) avec la roue dentée entraînée (1), tandis que la distance entre les broches (13) des maillons (7, 8) de la chaîne situées sur le côté coopérant avec la roue dentée entraînée (1) est variable en fonction de la circonférence de la chaîne (6) et du point d'engrènement (10) de la chaîne avec la roue dentée entraînée (1), ladite distance entre les broches (13) des maillons (7 , 8) la chaîne (6) sur son côté coopérant avec la roue dentée entraînée (1) est compatible avec le diamètre de la roue dentée entraînée (1).
